# EUROPÄISCHE PATENTSCHRIFT

(11) **EP 3 862 584 B1**
(45) Veröffentlichungstag und Bekanntmachung des Hinweises auf die Patenterteilung: **14.05.2025**
(21) Anmeldenummer: 20155830.1
(22) Anmeldetag: 06.02.2020
(51) Int. Cl.: F16B 37/06, F16B 33/00, F16B 5/02, F16B 19/10

(54) **BEFESTIGUNGSMITTEL AUFWEISEND EIN BLINDNIETELEMENT UND EIN DICHTELEMENT**
FASTENING MEANS COMPRISING A BLIND RIVET MEMBER AND A SEALING MEMBER
COMPOSANT DE FIXATION COMPORTANT UN RIVET BORGNE ET UN ÉLÉMENT D'ÉTANCHÉITÉ

(43) Veröffentlichungstag der Anmeldung: 11.08.2021
(73) Patentinhaber: BBA S.r.l., 63076 Centobuchi di Monteprandone (AP) (IT)
(72) Erfinder: HANRATTY, PAul, Southampton SO31 9BQ (GB)
(74) Vertreter: Franke, Markus

(56) Entgegenhaltungen:
- EP-A1- 0 663 537
- DE-A1- 10 342 316
- DE-A1- 102011 119 819
- DE-A1- 102012 000 547
- JP-A- H1 137 118
- JP-U- H0 712 613
- US-A- 5 569 005

## Beschreibung

Die vorliegende Erfindung betrifft ein Befestigungsmittel aufweisend ein Blindnietelement und ein Dichtelement.

Blindnietelemente haben sich für Befestigungsaufgaben bewährt, bei denen eine Schraubverbindung im Bereich dünnwandiger Materialien, beispielsweise Blechen, erforderlich ist, in die normalerweise kein Gewinde geschnitten werden kann. Ein Blindnietelement ist beispielweise aus der EP 1 918 596 A1 bekannt.

Ferner ist aus der DE 10 2012 015 144 A1 ein Befestigungsmittel aufweisend ein Blindnietelement und ein Dichtelement bekannt, wobei das Blindnietelement als Blindnietmutter mit einem Kopfabschnitt und einem in einer axialen Richtung an den Kopfabschnitt angrenzenden Schaft ausgebildet ist. An der Blindnietmutter liegt ein Dichtelement an, das verhindern soll, dass Feuchtigkeit in die Aufnahmeöffnung eines Bauteils aus kohlefaserverstärktem Kunststoff eindringt, in der die Blindnietmutter eingesteckt ist. Durch das Dichtelement kann die Aufnahmeöffnung vor Feuchtigkeitseintritt, etwa durch Spritzwasser, geschützt werden.

Aus der DE 10 2012 000 547 A1 ist ein Blindniet bekannt, wobei der Blindniet einen Nietkörper mit einem Schaft aufweist, wobei der Schaft von einer Hülse aus einem elektrisch nicht leitenden Kunststoff umgeben ist. Das aus der DE 10 2012 000 547 A1 bekannte Blindniet weist die Merkmale des Oberbegriffs des Patentanspruchs 1 auf. DE10342316A1 beschreibt ein bekanntes Befestigungsmittel.

Aufgabe der vorliegenden Erfindung ist es, ein Befestigungsmittel, das ein Blindnietelement aufweist, derart weiter zu bilden, dass eine Fluidströmung und/oder Wärmeströmung von einer ersten Seite eines Bauteils, in das das Befestigungsmittel eingebracht ist, auf eine der ersten Seite gegenüberliegende zweite Seite des Bauteils und umgekehrt im Bereich des Befestigungsmittels vermieden wird.

Diese Aufgabe wird durch ein Befestigungsmittels, das die Merkmale des Patentanspruchs 1 aufweist, gelöst.

Das Befestigungsmittel weist ein Blindnietelement und ein Dichtelement auf, wobei das Blindnietelement einen Kopfabschnitt und einen in eine axialen Richtung Z an den Kopfabschnitt angrenzenden Schaft aufweist. Der Schaft weist ein Innengewinde und zwischen dem Innengewinde und dem Kopfabschnitt einen Verformungsabschnitt auf. Der Verformungsabschnitt dient der Ausbildung eines Schließkopfes bei einem Verformen des Verformungsabschnitts. Das Dichtelement weist einen geschlossenen Mantelabschnitt und einen in der axialen Richtung an den Mantelabschnitt angrenzenden, geschlossenen Deckelabschnitt auf, wobei der Mantelabschnitt den Schaft des Blindnietelements zumindest im Bereich des Verformungsabschnitts umlaufend umschließt und der Deckelabschnitt an einem dem Kopfabschnitt abgewandten Ende des Schafts des Blindnietelements ausgebildet ist.

Das Blindnietelement ist als Blindnietmutter ausgebildet sein, insofern als Blindnietelement mit einem Innengewinde im Bereich des Schafts ausgebildet sein. Das Verbinden eines Befestigungsmittels, das ein Blindnietelement in Form einer Blindnietmutter aufweist, insofern ein Blindnietelement mit einem Innengewinde aufweist, mit einem Bauteil kann so erfolgen, dass das Befestigungsmittel mit zunächst in einem vorgefertigten Loch bzw. in einer vorgefertigten Aufnahmeöffnung des Bauteils platziert wird und dann mit einem geeigneten Werkzeug, das typischerweise einen rotierbaren und axial verschiebbaren Gewindedorn aufweist, vernietet wird. Hierzu wird der Gewindedorn von der Kopfabschnittseite her in das Innengewinde der Blindnietmutter geschraubt und, bei Anlage des Werkzeugs am Kopfabschnitt, dann axial so verschoben, dass eine Stauchung des Verformungsabschnitts erfolgt und sich somit zwischen dem Gewindeanfang und der Unterseite des Bauteils ein Gegenflansch, also ein Schließkopf, bildet. Der Schließkopf verankert zusammen mit dem Kopfabschnitt der Blindnietmutter, der auf der Oberseite des Bauteils angeordnet ist, die Blindnietmutter und somit das Befestigungsmittel in dem Bauteil. Anschließend wird der Gewindedorn ausgeschraubt. Die Blindnietmutter steht dann als Aufnahme für eine Befestigungsschraube zur Verfügung. Ist das Blindnietelement als Blindnietgewindebolzen ausgebildet, weist der Schaft eine Aufnahme für einen Gewindebolzen auf, der in aller Regel mit der Aufnahme verschweißt oder verpresst ist. Das Verbinden des Befestigungsmittels mit einem Blindnietgewindebolzen erfolgt entsprechend dem Verbinden des Befestigungsmittels mit Blindnietmutter, mit dem Unterschied, dass unmittelbar am Gewindebolzen gezogen wird.

Da das Dichtelement einen geschlossenen Mantelabschnitt und einen geschlossenen Deckelabschnitt aufweist, wobei der Mantelabschnitt den Schaft des Blindnietelements zumindest im Bereich des Verformungsabschnitts umlaufend umschließt und der Deckelabschnitt an einem dem Kopfabschnitt abgewandten Ende des Schafts des Blindnietelements ausgebildet ist, wird bei der Bildung des Schließkopfes der Mantelabschnitt des Dichtelements entsprechend der Verformung des Verformungsabschnitts des Schafts verformt und umschließt nach dem Setzen des Blindnietelements den Schließkopf des Blindnietelements. Typischerweise kommt somit der im Bereich des Schließkopfes verformte und vorzugsweise geschlossene Mantelabschnitt des Dichtelements auf der dem Kopfabschnitt des Blindnietelements abgewandten Seite des Bauteils an diesem Bauteil zur Anlage und liegt somit um die Aufnahmeöffnung herum an, sodass eine Fluidströmung - eine Strömung von Gas oder Flüssigkeit - von einer Seite des Bauteils auf die andere Seite des Bauteils durch die Aufnahmeöffnung und umgekehrt vermieden wird. Zusätzliche Effekte/ Vorteile sind der Schutz vor Partikeln, wie Staub oder Schmutz, die im Fluid mitgeführt werden, ferner, dass das Dichtelement/ der Kopfabschnitt ein Blindnietelement mit offenem Ende in ein solches mit geschlossenem Ende überführt. Das Blindnietelement ist deshalb ein billiger und einfacher zu produzierendes Teil, bei Vermeidung der bekannten mangelhaften Oberflächenbeschichtung von Blindnietelementen mit geschlossenem Ende, insbesondere Blindnietmuttern, bei denen es nicht möglich ist, beim Beschichten den untersten Bereich des Blindnietelements/ der Blindnietmutter zu erreichen.

Zudem ist das Blindnietelement, welches typischerweise aus einem Metall oder einer Metalllegierung besteht, auch nicht oder zumindest in geringerem Maße derjenigen Atmosphäre bzw. denjenigen Umgebungsbedingungen ausgesetzt, die auf der dem Schließkopf zugeordneten Seite des Bauteils herrschen. Beispielsweise wäre es denkbar, dass auf der dem Schließkopf zugeordneten Seite des Bauteils eine Atmosphäre herrscht, die für das Material des Blindnietelements korrodierend wäre oder eine Korrosion des Materials des Blindnietelements fördern würde, bspw. eine Atmosphäre mit hoher Luftfeuchtigkeit, oder eine Atmosphäre mit Metall oxidierenden Substanzen, bspw. eine Säure. Aufgrund dieses Korrosionsschutzes kann ein Blindnietelement/ eine Blindnietmutter aus kohlenstoffarmem Stahl (mit oder ohne Oberflächenbeschichtung) anstelle eines Blindnietelements/ einer Blindnietmutter aus rostfreiem Stahl verwendet werden.

Ferner wird durch das Dichtelement ein unmittelbarer Kontakt zwischen dem Schließkopf und der dem Schließkopf zugewandten Seite des Bauteils vermieden. Dies ist insbesondere in Hinblick auf die Vermeidung einer galvanischen Korrosion von Vorteil, insbesondere wenn das Blindnietelement und die dem Schließkopf zugewandte Seite des Bauteils aus unterschiedlichen Metallen oder Metalllegierungen bestehen.

Vorzugsweise liegt das Dichtelement am Schaft an. Insbesondere liegt der Mantelabschnitt des Dichtelements am Schaft an.

Als besonders vorteilhaft wird es angesehen, wenn das Dichtelement topfförmig, insbesondere als einseitig geschlossener Hohlzylinder, ausgebildet ist.

In einer besonders bevorzugten Ausführungsform weist eine Wandung des Schafts im Bereich des Verformungsabschnitts eine Schwächung, beispielsweise in Form von Löchern, Schlitzen oder Perforierungen, auf, zwecks Bildung des Verformungsabschnitts.

Als besonders vorteilhaft wird es angesehen, wenn bei der Ausbildung des Schließkopfes sich der Mantelabschnitt des Dichtelements unter Beibehaltung der geschlossenen Struktur verformt. Dabei ist es durchaus denkbar, dass der Mantelabschnitt unter Verringerung der Materialstärke der Verformung des Verformungsabschnitts folgt. Es ist auch eine Verformung unter Wulstbildung denkbar.

In einer besonders bevorzugten Ausführungsform ist das Blindnietelement aus einem Metall oder einer Metalllegierung gefertigt.

Als besonders vorteilhaft wird es angesehen, wenn das Dichtelement aus einem Kunststoff gefertigt ist, beispielsweise aus einem Polymer gefertigt ist. Bei dem Kunststoff handelt es sich insbesondere um Polyester.

Bei dem Material des Dichtelements handelt es sich insbesondere um ein nicht leitendes Material. Dies ist insbesondere in Hinblick auf die Vermeidung einer galvanischen Korrosion von Vorteil.

Das Material des Dichtelements ist insbesondere derart ausgebildet, dass es der Verformung des Verformungsabschnitts folgen kann, ohne dass es zu einem Bruch oder einer Rissbildung des Dichtelements kommt.

Als besonders vorteilhaft wird es angesehen, wenn das Blindnietelement eine das Blindnietelement in der axialen Richtung durchsetzende Durchgangsöffnung aufweist.

Es ist vorgesehen, dass der Deckelabschnitt des Dichtelements und das dem Kopfabschnitt abgewandte Ende des Schafts des Blindnietelements in der axialen Richtung voneinander beabstandet sind. Dies ist insbesondere hinsichtlich einer Verformung des Mantelabschnitts bei Verformung des Verformungsabschnitts von Vorteil, da der Abstand eine Verringerung der axialen Erstreckung des Dichtelements ermöglicht ohne eine Krafteinwirkung des dem Kopfabschnitt abgewandten Endes des Schafts auf den Deckelabschnitt. Ferner ist der Abstand zwischen dem Deckelabschnitt und dem dem Kopfabschnitt abgewandten Ende des Schafts dahingehend von Vorteil, dass ein Setzdorn, eine Schraube oder ein sonstiges ein Gewinde aufweisendes Verbindungsmittel derart in das Blindnietelement eingebracht werden kann, dass der Setzdorn, die Schraube bzw. das sonstige Verbindungsmittel den Schaft vollständig durchsetzt, ohne dass die Schraube bzw. das sonstige Verbindungsmittel auf den Deckelabschnitt des Dichtelements einwirkt. Dadurch wird vermieden, dass der Deckelabschnitt beim Einbringen des Setzdorns, der Schraube bzw. des sonstigen Verbindungsmittels in das Blindnietelement beschädigt oder gar zerstört wird.

Der Abstand zwischen dem Deckelabschnitt und dem Ende des Schafts beträgt zumindest das 1,0-fache der Steigung des Innengewindes. Unter Steigung wird vorliegend der axiale Abstand verstanden, der durch eine Umdrehung zurückgelegt wird, also der Abstand zwischen zwei Gewindespitzen. Der Abstand beträgt insbesondere zumindest das 3,0-fache, vorzugsweise das 4,0-fache, bevorzugt das 5,0-fache der Steigung des Innengewindes.

Als besonders vorteilhaft wird es angesehen, wenn der Abstand zumindest 20% der Länge des Schafts beträgt.

Als besonders vorteilhaft wird es angesehen, wenn der Mantelabschnitt sich bis zum Kopfabschnitt erstreckt. Dadurch ist gewährleistet, dass das Dichtelement auch im Bereich der Durchgangsöffnung des Bauteils angeordnet ist, wodurch die Dichtwirkung verbessert und ein unmittelbarer Kontakt zwischen Bauteil und Blindnietelement in diesem Bereich vermieden wird.

In einer vorteilhaften Weiterbildung ist vorgesehen, dass das Dichtelement, vorzugsweise zwischen dem Kopfabschnitt und dem Verformungsabschnitt, insbesondere an seinem dem Deckelabschnitt abgewandten Ende, einen gegenüber dem Mantelabschnitt radial außen hervorstehenden, umlaufenden Vorsprung aufweist. Vorzugsweise wird unter Krafteinwirkung des Kopfabschnitts beim Setzen des Blindnietelements dieser radial außen hervorstehende, umlaufende Vorsprung gegen das erste Bauteil gedrückt und zwischen dem Kopfabschnitt und dem Bauteil eingeklemmt, wodurch eine besonders gute Dichtwirkung erzielt werden kann.

Als besonders vorteilhaft wird es in diesem Zusammenhang angesehen, wenn der Vorsprung radial außen gegenüber dem Kopfabschnitt hervorsteht.

In einer vorteilhaften Weiterbildung weist das Dichtelement einen weiteren Mantelabschnitt auf, wobei der weitere Mantelabschnitt den Kopfabschnitt des Blindnietelements umlaufend umschließt.

Vorzugsweise steht ein Teilbereich des weiteren Mantelabschnitts entgegen der axialen Richtung gegenüber dem Kopfabschnitt hervor. Vorzugsweise ist der entgegen der axialen Richtung hervorstehende Teilbereich des weiteren Mantelabschnitts derart nach radial innen verformbar, dass dieser nach dem Verformen nach radial innen den Kopfabschnitt in der axialen Richtung abdeckt. Das Verformen des Teilbereichs kann bspw. beim Setzen des Blindnietelements erfolgen. Es ist aber auch durchaus denkbar, den Teilbereich separat umzuformen, bspw. vor oder nach dem Setzen des Blindnietelements. Vorzugsweise erfolgt das Umformen mittels des zur Bildung des Schließkopfes zu verwendenden Setzwerkszeugs.

In einer bevorzugten Ausführungsform des Befestigungsmittels ist vorgesehen, dass das Dichtelement und das Blindnietelement unlösbar miteinander verbunden sind. Das Dichtelement und das Blindnietelement sind insbesondere stoffschlüssig miteinander verbunden, insbesondere miteinander verklebt.

Das Dichtelement ist in einer bevorzugten Ausführungsform des Befestigungsmittels an das Blindnietelement angespritzt. Dadurch kann das Befestigungsmittel besonders einfach und kostengünstig hergestellt werden.

In einer alternativen Ausführungsform sind das Dichtelement und das Blindnietelement lösbar miteinander verbunden. Das Dichtelement und das Blindnietelement sind insbesondere kraftschlüssig miteinander verbunden. Vorzugsweise ist das Blindnietelement in das Dichtelement eingepresst.

In einer besonders bevorzugten Ausführungsform bilden das Blindnietelement und das Dichtelement separate Bauteile. Dies wirkt sich vorteilhaft auf die Lagerhaltung aus, da ein separates Blindnietelement, das grundsätzlich auch ohne ein Dichtelement verwendet werden kann, bei Bedarf zusammen mit dem Dichtelement Verwendung findet. Es ist durchaus denkbar, dass ein separates Blindnietelement zwecks Bildung des Befestigungsmittels bei Bedarf in ein separates Dichtelement eingepresst wird und, nach dem Einpressen, das Blindnietelement und das Dichtelement gemeinsam gehandhabt werden. Es ist aber auch denkbar, dass zunächst das Dichtelement in die Durchgangsöffnung des Bauteils eingebracht wird und anschließend das Blindnietelement in das Dichtelement eingesetzt wird und auf diese Weise das Befestigungsmittel gebildet wird.

Das Dichtelement ist vorzugsweise aus einem Polymer gefertigt, insbesondere aus einem thermoplastischen Polymer gefertigt.

Als besonders vorteilhaft wird es angesehen, wenn das Blindnietelement aus einem Metall oder einer Metalllegierung gefertigt ist und das Dichtelement aus einem Kunststoff, insbesondere einem Polymer, bevorzugt Polystyrol, gefertigt ist.

Das Dichtelement ist vorzugsweise einteilig ausgebildet.

Das Blindnietelement ist bevorzugt einteilig ausgebildet.

In den nachfolgenden Figuren ist die Erfindung anhand von drei exemplarischen Ausführungsbeispielen näher erläutert, ohne auf diese beschränkt zu sein.

Es zeigen:
- Fig. 1: eine erste Ausführungsform eines Befestigungsmittels aufweisend ein Blindnietelement und ein Dichtelement in einer Ansicht gemäß dem Pfeil I in Fig. 2,
- Fig. 2: das Befestigungsmittel in einer Ansicht gemäß dem Pfeil II in Fig. 1,
- Fig. 3: das Befestigungsmittel in einer Schnittansicht gemäß der Linie III-III in Fig. 4,
- Fig. 4: das Befestigungsmittel in einer Ansicht gemäß dem Pfeil IV in Fig. 3,
- Fig. 5: eine Anordnung von einem verformten Befestigungsmittel gemäß Fig. 1 und einem Bauteil in einer Ansicht gemäß dem Pfeil V in Fig. 6,
- Fig. 6: die Anordnung gemäß Fig. 5 in einer Schnittansicht gemäß der Linie VI-VI,
- Fig. 7: das Blindnietelement des Befestigungsmittels gemäß Fig. 1 in einer Seitenansicht,
- Fig. 8: das Dichtelement des Befestigungsmittels gemäß Fig. 1 in einer teilweise geschnittenen Darstellung
- Fig. 9: eine zweite Ausführungsform des Befestigungsmittels aufweisend ein Blindnietelement und ein Dichtelement in einer teilweise geschnittenen Darstellung,
- Fig. 10: eine Anordnung von einem verformten Befestigungsmittel gemäß Fig. 9 und einem Bauteil in einer Schnittansicht,
- Fig. 11: die Anordnung gemäß Fig. 10 mit einem verformten Teilabschnitt eines weiteren Mantelabschnitts,
- Fig. 12: das Dichtelement des Befestigungsmittels gemäß Fig. 9 in einer teilweise geschnittenen Darstellung
- Fig. 13: eine nicht vom Schutzumfang der Patentansprüche umfasste Gestaltung des Befestigungsmittels aufweisend ein Blindnietelement und ein Dichtelement in einer teilweise geschnittenen Darstellung,
- Fig. 14: eine Anordnung von einem verformten Befestigungsmittel gemäß Fig. 13 und einem Bauteil in einer Schnittansicht.

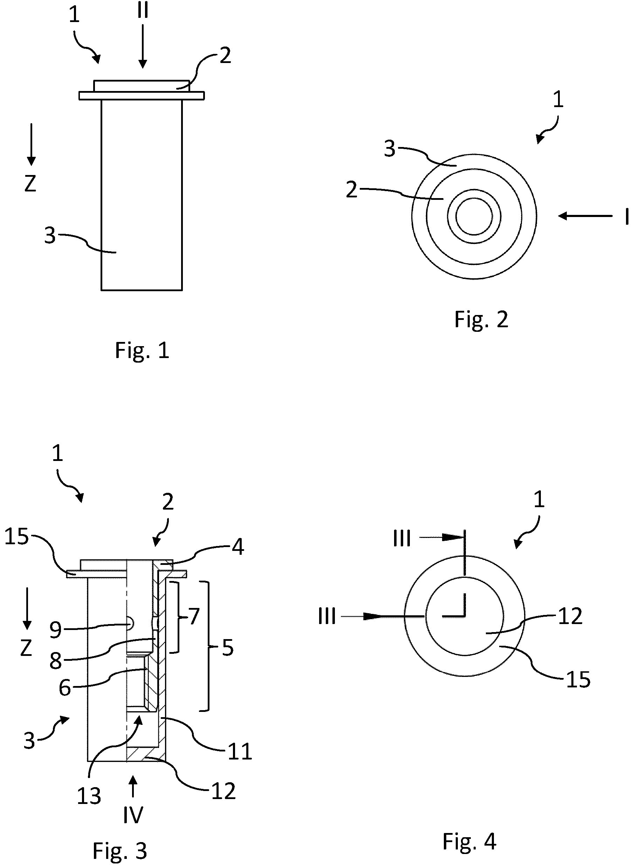

Die Fig. 1 bis 6 zeigen eine erste Ausführungsform eines Befestigungsmittels 1 aufweisend ein als Blindnietmutter ausgebildetes Blindnietelement 2 und ein Dichtelement 3, wobei das Blindnietelement 2 einen Kopfabschnitt 4 und einen in einer axialen Richtung Z an den Kopfabschnitt 4 angrenzenden Schaft 5 aufweist. Der Schaft 5 weist ein Innengewinde 6 und zwischen dem Innengewinde 6 und dem Kopfabschnitt 4 einen Verformungsabschnitt 7 auf. Der Verformungsabschnitt 7 ist vorliegend dadurch gebildet, dass eine Wandung 8 des Schafts 5 im Bereich des Verformungsabschnitts 7 eine Schwächung in Form von vier Löchern 9 aufweist. Der Verformungsabschnitt 7 dient der Ausbildung eines Schließkopfes 10 bei einem Verformen des Verformungsabschnitts 7. In den Fig. 1 bis 4, sowie 7 befindet sich das Blindnietelement 2 in einem unverformten Zustand, somit in einem Zustand vor einem Setzen des Blindnietelements 2.

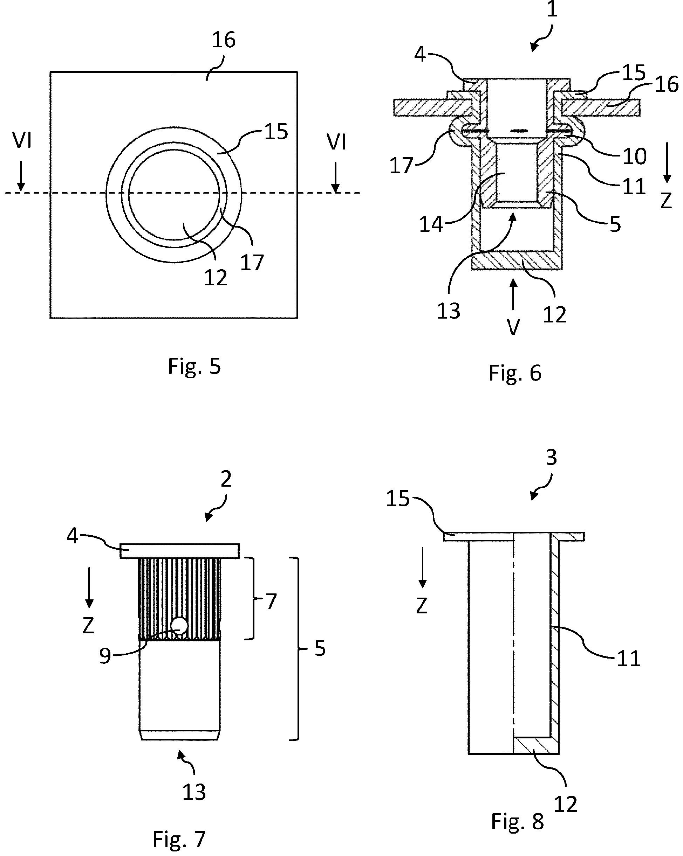

Das Dichtelement 3 ist vorliegend topfförmig, nämlich als einseitig geschlossener Hohlzylinder ausgebildet, wobei das Dichtelement 3 einen geschlossenen Mantelabschnitt 11 und einen in der axialen Richtung Z an den Mantelabschnitt 11 angrenzenden, geschlossenen Deckelabschnitt 12 aufweist. Der Mantelabschnitt 11 erstreckt sich vorliegend bis zum Kopfabschnitt 4 und umschließt den Schaft 5 des Blindnietelements 2 umlaufend und liegt insbesondere umlaufend am Schaft 5 an. Der Deckelabschnitt 12 ist an einem dem Kopfabschnitt 4 abgewandten Ende 13 des Schafts 5 des Blindnietelements 2 ausgebildet. Zwecks Bereitstellung eines Gewindes in einem Bauteil 16, wird das Befestigungsmittel 1 in eine vorgefertigte Aufnahmeöffnung des Bauteils 16 eingebracht und anschließend der Verformungsabschnitt 7 verformt, um den Schließkopf 10 auszubilden. Wie insbesondere der Fig. 6, die eine Anordnung von dem Befestigungsmittel 1 und dem Bauteil 16 zeigt, zu entnehmen ist, verformt sich der Mantelabschnitt 11 des Dichtelements 3 bei der Ausbildung des Schließkopfes 10 des Blindnietelements 2 derart, dass der Mantelabschnitt 11 seine geschlossene Struktur unter Ausbildung einer Wulst 17 beibehält.

Aufgrund des Dichtelements 3 ist nach einem Verformen des Blindnietelements 2 eine dem Kopfabschnitt 4 des Blindnietelements 2 zugeordnete erste Seite des Bauteils 16, in das das Befestigungsmittel 1 eingebracht ist, von einer der ersten Seite des Bauteils 16 abgewandten zweiten Seite des Bauteils 16, die dem Schließkopf 10 zugeordnet ist, fluiddicht getrennt. Insofern ist kein Strömen von Fluid von der ersten Seite des Bauteils 16 in Richtung der zweiten Seite des Bauteils 16 und umgekehrt durch die Aufnahmeöffnung, in die das Befestigungsmittel 1 eingebracht ist, möglich. Ferner ist, wie insbesondere der Fig. 6 zu entnehmen ist, das Blindnietelement 2 durch das Dichtelement 3 von der Umgebung bzw. Atmosphäre, die auf der zweiten Seite des Bauteils 16 herrscht, getrennt bzw. dieser Atmosphäre bzw. Umgebung nicht ausgesetzt. Beispielsweise könnte die zweite Seite eine Innenseite eines Tanks sein, in dem eine Flüssigkeit oder ein Gas gelagert ist. Dadurch, dass das Dichtelement 3 das Blindnietelement 2 gegenüber der auf der zweiten Seite des Bauteils 16 herrschenden Umgebung abdichtet, ist auch ein in das Blindnietelement 2 eingebrachtes Befestigungsmittel, beispielsweise eine Schraube, gegenüber dieser Umgebung abgedichtet.

Das Blindnietelement 2 weist vorliegend eine das Blindnietelement 2 in der axialen Richtung Z durchsetzende Durchgangsöffnung 14 auf. Insofern ermöglicht das Blindnietelement 2, dass bspw. eine in das Blindnietelement 2 eingebrachte Schraube oder ein Setzdorn das Blindnietelement 2 axial durchsetzt und insofern gegenüber dem Ende 13 des Schafts 5 in der axialen Richtung Z hervorsteht. Dadurch, dass der Deckelabschnitt 12 des Dichtelements 3 und das dem Kopfabschnitt 4 abgewandte Ende 13 des Schafts 5 in der axialen Richtung Z beabstandet sind, kann die in das Blindnietelement 2 eingebrachte Schraube oder der Setzdorn in der axialen Richtung Z gegenüber dem Ende 13 hervorstehen, ohne dass es beim Einbringen der Schraube oder des Setzdorns zu einer Beschädigung des Deckelabschnitts 12 kommt.

Das Dichtelement 3 weist an seinem den Deckelabschnitt 12 abgewandten Ende einem gegenüber dem Mantelabschnitt 11 radial außen hervorstehenden, umlaufenden Vorsprung 15 auf, wobei der Vorsprung 15 radial außen gegenüber dem Kopfabschnitt 4 hervorsteht. Das Blindnietelement 2 und das Dichtelement 3 können durchaus separate Bauteile bilden, wie dies in den Fig. 7 und 8 dargestellt ist.

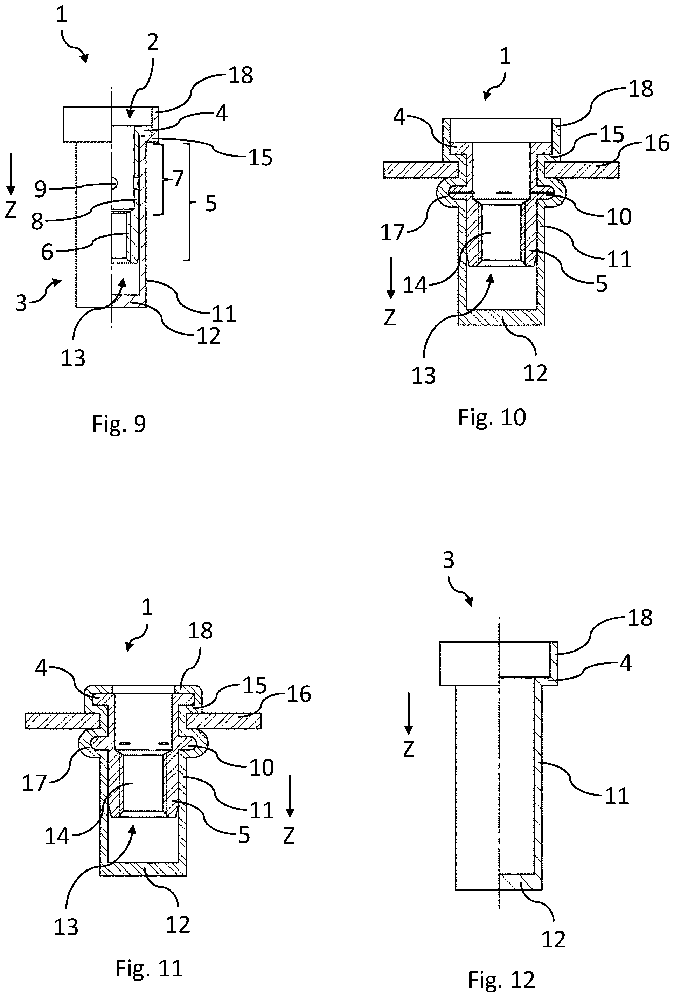

Die Figuren 9 bis 11 zeigen eine zweite Ausführungsform eines Befestigungsmittels 1. Diese zweite Ausführungsform unterscheidet sich von der ersten Ausführungsform im Wesentlichen durch die Gestaltung des Dichtelements 3, das einen weiteren Mantelabschnitt 18 aufweist, wobei der weitere Mantelabschnitt 18 den Kopfabschnitt 4 des Blindnietelements 2 umlaufend umschließt und ein Teilbereich des Mantelabschnitts 18 entgegen der axialen Richtung Z gegenüber dem Kopfabschnitt 4 hervorsteht. Der entgegen der axialen Richtung Z hervorstehende Teilbereich des weiteren Mantelabschnitts 18 ist derart nach radialen innen verformbar, dass dieser nach dem Verformen nach radial innen den Kopfabschnitt 4 in der axialen Richtung Z abdeckt, wie dies der Fig. 11 gezeigt ist. Das Verformen des Teilbereichs erfolgt vorliegend in einem separaten Verfahrensschritt nach dem Setzen des Blindnietelements 2, wie ein Vergleich der Fig. 10 und 11 zeigt.

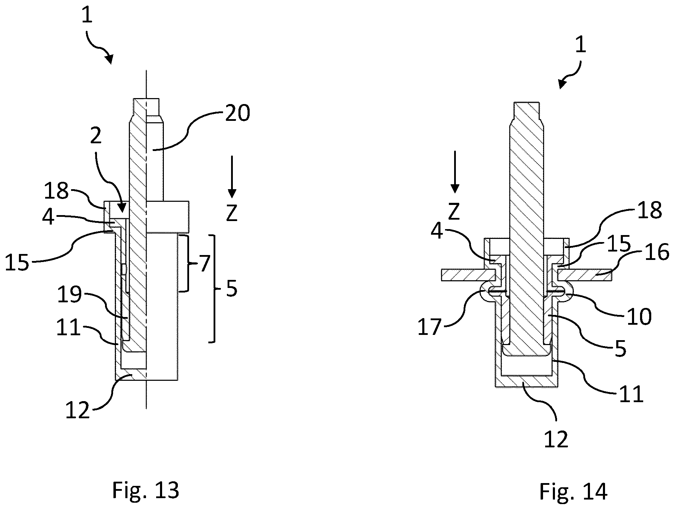

Die Figuren 13 und 14 zeigen eine nicht vom Schutzumfang der Patentansprüche umfasste Gestaltung des Befestigungsmittels 1, wobei sich diese Gestaltungvon dem zweiten Ausführungsbeispiel im Wesentlichen durch die Gestaltung des Blindnietelements 2 unterscheidet, das vorliegend als Blindnietgewindebolzen ausgebildet ist, insofern der Schaft 5 einen Verbindungsabschnitt 19 für einen Gewindebolzen 20 aufweist.

### Bezugszeichenliste

- 1: Befestigungsmittel
- 2: Blindnietelement
- 3: Dichtelement
- 4: Kopfabschnitt
- 5: Schaft
- 6: Innengewinde
- 7: Verformungsabschnitt
- 8: Wandung
- 9: Loch
- 10: Schließkopf
- 11: Mantelabschnitt
- 12: Deckelabschnitt
- 13: Ende
- 14: Durchgangsöffnung
- 15: Vorsprung
- 16: Bauteil
- 17: Wulst
- 18: Mantelabschnitt
- 19: Verbindungsabschnitt
- 20: Gewindebolzen

- Z: axiale Richtung

## Patentansprüche

1. Befestigungsmittel (1) aufweisend ein Blindnietelement (2) und ein Dichtelement (3), wobei das Blindnietelement (2) einen Kopfabschnitt (4) und einen in einer axialen Richtung (Z) an den Kopfabschnitt (4) angrenzenden Schaft (5) aufweist, **dadurch gekennzeichnet, dass** der Schaft (5) ein Innengewinde (6) und zwischen dem Innengewinde (6) und dem Kopfabschnitt (4) einen Verformungsabschnitt (7) aufweist, zur Ausbildung eines Schließkopfes (10) bei einem Verformen des Verformungsabschnitts (7), wobei das Dichtelement (3) einen geschlossenen Mantelabschnitt (11) und einen in der axialen Richtung (Z) an den Mantelabschnitt (11) angrenzenden, geschlossenen Deckelabschnitt (12) aufweist, wobei der Mantelabschnitt (11) den Schaft (5) des Blindnietelements (2) zumindest im Bereich des Verformungsabschnitts (7) umlaufend umschließt und der Deckelabschnitt (12) an einem dem Kopfabschnitt (4) abgewandten Ende (13) des Schafts (5) des Blindnietelements (2) ausgebildet ist, wobei der Deckelabschnitt (12) des Dichtelements (3) und das dem Kopfabschnitt (4) abgewandten Ende (13) des Schafts (5) des Blindnietelements (2) in der axialen Richtung (Z) beabstandet sind, wobei der Abstand zwischen dem Deckelabschnitt (12) und dem Ende (13) des Schafts (5) zumindest das 1,0-fache der Steigung des Innengewindes (6) beträgt.

2. Befestigungsmittel nach Anspruch 1, wobei das Dichtelement (3) topfförmig, insbesondere als einseitig geschlossener Hohlzylinder ausgebildet ist.

3. Befestigungsmittel nach Anspruch 1 oder 2, wobei bei der Ausbildung des Schließkopfes (10) sich der Mantelabschnitt (11) des Dichtelements (3) unter Beibehaltung der geschlossenen Struktur verformt.

4. Befestigungsmittel nach einem der vorigen Ansprüche, wobei das Blindnietelement (2) aus einem Metall gefertigt ist und das Dichtelement (3) aus einem Kunststoff gefertigt ist.

5. Befestigungsmittel nach einem der vorigen Ansprüche, wobei das Blindnietelement (2) eine das Blindnietelement (2) in der axialen Richtung (Z) durchsetzende Durchgangsöffnung (14) aufweist.

6. Befestigungsmittel nach einem der vorigen Ansprüche, wobei der Abstand zwischen dem Deckelabschnitt (12) und dem Ende (13) des Schafts (5) das 2,0 bis 3,0-fache der Steigung des Innengewindes (6) beträgt.

7. Befestigungsmittel nach einem der vorigen Ansprüche, wobei der Mantelabschnitt (11) sich bis zum Kopfabschnitt (4) erstreckt.

8. Befestigungsmittel nach einem der vorigen Ansprüche, wobei das Dichtelement (3) einen gegenüber dem Mantelabschnitt (11) radial außen hervorstehenden, umlaufenden Vorsprung (15) aufweist.

9. Befestigungsmittel nach einem der vorigen Ansprüche, wobei das Dichtelement (3) einen weiteren Mantelabschnitt (18) aufweist, wobei der weitere Mantelabschnitt (18) dem Kopfabschnitt (4) des Blindnietelements (2) umlaufend umschließt.

10. Befestigungsmittel nach Anspruch 9, wobei ein Teilbereich des weiteren Mantelabschnitts (18) entgegen der axialen Richtung (Z) gegenüber dem Kopfabschnitt (4) hervorsteht.

11. Befestigungsmittel nach einem der vorigen Ansprüche, wobei das Dichtelement (3) und das Blindnietelement (2) unlösbar miteinander verbunden sind.

12. Befestigungsmittel nach Anspruch 11, wobei das Dichtelement (3) an das Blindnietelement (2) angespritzt ist.

13. Befestigungsmittel nach einem der Ansprüche 1 bis 10, wobei das Dichtelement (3) lösbar mit dem Blindnietelement (2) verbunden ist.

14. Befestigungsmittel nach einem der Ansprüche 1 bis 10 und/oder 13, wobei das Blindnietelement (2) und das Dichtelement (3) separate Bauteile bilden.

15. Befestigungsmittel nach einem der vorigen Ansprüche, wobei das Dichtelement (3) aus einem Polymer gefertigt ist.

## Claims

1. Fastening means (1) having a blind rivet element (2) and a sealing element (3), wherein the blind rivet element (2) has a head portion (4) and a shaft (5) adjoining the head portion (4) in an axial direction (Z), **characterized in that** the shaft (5) has an internal thread (6) and, between the internal thread (6) and the head portion (4), a deformation portion (7), for forming a closing head (10) when the deformation portion (7) is deformed, wherein the sealing element (3) has a closed lateral portion (11) and a closed cover portion (12) adjoining the lateral portion (11) in the axial direction (Z), wherein the lateral portion (11) circumferentially encloses the shaft (5) of the blind rivet element (2) at least in the region of the deformation portion (7), and the cover portion (12) is formed at an end (13) of the shaft (5) of the blind rivet element (2), said end facing away from the head portion (4), wherein the cover portion (12) of the sealing element (3) and that end (13) of the shaft (5) of the blind rivet element (2) which faces away from the head portion (4) are spaced apart in the axial direction (Z), wherein the distance between the cover portion (12) and the end (13) of the shaft (5) is at least 1.0 times the pitch of the internal thread (6).

2. Fastening means according to Claim 1, wherein the sealing element (3) is pot-shaped, in particular is configured in the form of a hollow cylinder which is closed on one side.

3. Fastening means according to Claim 1 or 2, wherein, during the formation of the closing head (10), the lateral portion (11) of the sealing element (3) is deformed while maintaining the closed structure.

4. Fastening means according to one of the preceding claims, wherein the blind rivet element (2) is manufactured from a metal and the sealing element (3) is manufactured from a plastic.

5. Fastening means according to one of the preceding claims, wherein the blind rivet element (2) has a passage opening (14) which passes through the blind rivet element (2) in the axial direction (Z).

6. Fastening means according to one of the preceding claims, wherein the distance between the cover portion (12) and the end (13) of the shaft (5) is 2.0 to 3.0 times the pitch of the internal thread (6).

7. Fastening means according to one of the preceding claims, wherein the lateral portion (11) extends up to the head portion (4).

8. Fastening means according to one of the preceding claims, wherein the sealing element (3) has a circumferential projection (15) which protrudes radially outwardly in relation to the lateral portion (11).

9. Fastening means according to one of the preceding claims, wherein the sealing element (3) has a further lateral portion (18), wherein the further lateral portion (18) circumferentially encloses the head portion (4) of the blind rivet element (2).

10. Fastening means according to Claim 9, wherein a partial region of the further lateral portion (18) protrudes counter to the axial direction (Z) in relation to the head portion (4).

11. Fastening means according to one of the preceding claims, wherein the sealing element (3) and the blind rivet element (2) are connected to one another in a non-releasable manner.

12. Fastening means according to Claim 11, wherein the sealing element (3) is injection-moulded onto the blind rivet element (2).

13. Fastening means according to one of Claims 1 to 10, wherein the sealing element (3) is connected to the blind rivet element (2) in a releasable manner.

14. Fastening means according to one of Claims 1 to 10 and/or 13, wherein the blind rivet element (2) and the sealing element (3) form separate components.

15. Fastening means according to one of the preceding claims, wherein the sealing element (3) is manufactured from a polymer.

## Revendications

1. Moyen de fixation (1) présentant un élément rivet aveugle (2) et un élément d'étanchéité (3), l'élément rivet aveugle (2) présentant une partie tête (4) et une tige (5) adjacente à la partie tête (4) dans une direction axiale (Z), **caractérisé en ce que** la tige (5) présente un filetage intérieur (6) et, entre le filetage intérieur (6) et la partie tête (4), une partie de déformation (7) pour la réalisation d'une tête de fermeture (10) lors d'une déformation de la partie de déformation (7), l'élément d'étanchéité (3) présentant une partie enveloppe (11) fermée et une partie couvercle (12) fermée adjacente à la partie enveloppe (11) dans la direction axiale (Z), la partie enveloppe (11) entourant de manière périphérique la tige (5) de l'élément rivet aveugle (2) au moins dans la région de la partie de déformation (7) et la partie couvercle (12) étant réalisée à une extrémité (13), opposée à la partie tête (4), de la tige (5) de l'élément rivet aveugle (2), la partie couvercle (12) de l'élément d'étanchéité (3) et l'extrémité (13), opposée à la partie tête (4), de la tige (5) de l'élément rivet aveugle (2) étant espacées dans la direction axiale (Z), la distance entre la partie couvercle (12) et l'extrémité (13) de la tige (5) valant au moins 1,0 fois le pas du filetage intérieur (6).

2. Moyen de fixation selon la revendication 1, l'élément d'étanchéité (3) étant réalisé en forme de pot, en particulier en tant que cylindre creux fermé unilatéralement.

3. Moyen de fixation selon la revendication 1 ou 2, la partie enveloppe (11) de l'élément d'étanchéité (3) se déformant en maintenant la structure fermée lors de la réalisation de la tête de fermeture (10).

4. Moyen de fixation selon l'une des revendications précédentes, l'élément rivet aveugle (2) étant fabriqué à partir d'un métal et l'élément d'étanchéité (3) étant fabriqué à partir d'une matière synthétique.

5. Moyen de fixation selon l'une des revendications précédentes, l'élément rivet aveugle (2) présentant une ouverture de passage (14) traversant l'élément rivet aveugle (2) dans la direction axiale (Z).

6. Moyen de fixation selon l'une des revendications précédentes, la distance entre la partie couvercle (12) et l'extrémité (13) de la tige (5) valant de 2,0 à 3,0 fois le pas du filetage intérieur (6).

7. Moyen de fixation selon l'une des revendications précédentes, la partie enveloppe (11) s'étendant jusqu'à la partie tête (4).

8. Moyen de fixation selon l'une des revendications précédentes, l'élément d'étanchéité (3) présentant une saillie (15) périphérique faisant saillie radialement vers l'extérieur par rapport à la partie enveloppe (11).

9. Moyen de fixation selon l'une des revendications précédentes, l'élément d'étanchéité (3) présentant une autre partie enveloppe (18), l'autre partie enveloppe (18) entourant de manière périphérique la partie tête (4) de l'élément rivet aveugle (2).

10. Moyen de fixation selon la revendication 9, une région partielle de l'autre partie enveloppe (18) faisant saillie par rapport à la partie tête (4) en sens inverse de la direction axiale (Z).

11. Moyen de fixation selon l'une des revendications précédentes, l'élément d'étanchéité (3) et l'élément rivet aveugle (2) étant reliés l'un à l'autre de manière non amovible.

12. Moyen de fixation selon la revendication 11, l'élément d'étanchéité (3) étant moulé par injection sur l'élément rivet aveugle (2).

13. Moyen de fixation selon l'une des revendications 1 à 10, l'élément d'étanchéité (3) étant relié de manière amovible à l'élément rivet aveugle (2).

14. Moyen de fixation selon l'une des revendications 1 à 10 et/ou 13, l'élément rivet aveugle (2) et l'élément d'étanchéité (3) formant des composants séparés.

15. Moyen de fixation selon l'une des revendications précédentes, l'élément d'étanchéité (3) étant fabriqué à partir d'un polymère.
